# EUROPEAN PATENT APPLICATION

(11) **EP 3 793 287 A1**
(43) Date of publication of application: **17.03.2021**
(21) Application number: 19798908.0
(22) Date of filing: 07.05.2019
(51) Int. Cl.: H04W 72/04

(54) **RESOURCE DETERMINATION AND RECEIVING METHODS, APPARATUS, NETWORK DEVICE AND TERMINAL**

(30) Priority: 11.05.2018 CN 201810450313
(71) Applicant: China Mobile Communication Co., Ltd Research Institute, Beijing 100053 (CN); CHINA MOBILE COMMUNICATIONS GROUP CO., LTD, Beijing 100032 (CN)
(72) Inventor: WU, Dan, Beijing 100032 (CN); SHAO, Hua, Beijing 100032 (CN); XU, Xiaodong, Beijing 100032 (CN); HOU, Xueying, Beijing 100032 (CN); XIA, Liang, Beijing 100032 (CN)
(74) Representative: Hertin und Partner Rechts- und Patentanwälte PartG mbB
(86) International application number: PCT/CN2019/085809
(87) International publication number: WO 2019/214599

(57) **Abstract**

A resource determination method, a receiving method, a device, a network device and a terminal are provided. The resource determination method includes: determining a random access occasion within an uplink symbol as a valid random access occasion. The receiving method includes: the terminal not expecting to receive a downlink signal at a valid random access occasion and/or within M symbols before a valid random access occasion.

## Description

### CROSS REFERENCE OF RELATED APPLICATION

The present disclosure claims a priority of Chinese patent application No. 201810450313.5 filed on May 11, 2018, which is incorporated herein by reference in its entirety.

### TECHNICAL FIELD

The present disclosure relates to the field of communications technologies, and in particular, to a resource determination method, a receiving method, a device, a network device and a terminal.

### BACKGROUND

According to the progress discussed by the 3GPP standard in the related art, it is clear that a random access transmission occasion (RACH occasion, RO) can be configured in an Uplink (UL) resource and a Flexible resource (X part) of a semi-static uplink and downlink configuration, and an actually available resource (i.e., a valid RO) needs to be determined according to a certain rule, and a method for determining a Valid RO in the related art needs to satisfy the following conditions:
1. UL part and/or X part in semi-static configuration;
2. no collision with a Synchronization Signal Block (SSB) or no SSB following it in a Physical Random Access Channel (PRACH) slot;
3. Valid RO follows N symbols after the last symbol of the SSB in the semi-statically configured DL part and/or PRACH slot.

In addition, in order to ensure that the RO configured on the Flexible resource can be correctly received, the terminal is also limited to not receive any downlink signal on the Valid RO resource.

In summary, the determination of Valid RO has two problems:
the first problem is that: the ROs on UL resources may not be transmitted;
the N symbols may cover the UL part, and according to the current conclusion, even the RO configured on the uplink resource may be not transmitted when not satisfying the interval of N symbols, and the number of available ROs is reduced.

The second problem is that: in the related art, there is at least an interval of N symbols between the Valid RO and the semi-statically configured downlink and/or SSB, where the N symbols are used for performing downlink-to-uplink switching for the terminal, and even if the N symbols are on a Flexible resource, the terminal cannot receive downlink signals, and the standard in the related art does not specify a clear terminal behavior in an interval time of N symbols, which results in a waste of resources.

### SUMMARY

The present disclosure is to provide a resource determination method, a resource receiving method, a device, a network device and a terminal, so as to solve a problem that a random access occasion on an uplink resource cannot be transmitted in the related art and a resource waste problem due to N symbols between a valid random access occasion and a downlink resource and/or an SSB.

A resource determination method is provided in an embodiment of the present disclosure, applied to a terminal and including:
determining a random access occasion within an uplink symbol as a valid random access occasion.

Optionally, the method further includes:
determining the uplink symbol according to uplink and downlink configuration information in a high-level parameter.

Optionally, in a case that all transmission symbols occupied by the random access occasion are within the uplink symbol, the random access occasion is a random access occasion within the uplink symbol.

Optionally, in a case that a start symbol occupied by the random access occasion is within the uplink symbol, the random access occasion is a random access occasion within the uplink symbol.

Optionally, the terminal does not expect to receive a downlink signal in N1 symbols before the random access occasion within the uplink symbol; N1 is a non-negative integer.

Optionally, an interval between a start symbol of the random access occasion within the uplink symbol and a last downlink symbol includes any number of symbols;
and/or
an interval between a start symbol of the random access occasion within the uplink symbol and a last symbol of a synchronous broadcast signal block includes any number of symbols.

Optionally, the method further includes:
determining the downlink symbol according to uplink and downlink configuration information in a high-level parameter.

Optionally, the synchronization broadcast signal block is in a random access slot where the random access occasion is located.

A resource configuration method is further provided in an embodiment of the present disclosure, applied to a network device and including: configuring a random access occasion, where
in a case that the random access occasion is configured in an uplink symbol,
an interval between a start symbol of the random access occasion and a last downlink symbol is greater than or equal to N2 symbols; and/or
an interval between a start symbol of the random access occasion and a last symbol of a synchronous broadcast signal block is greater than or equal to N2 symbols;
where N2 is a non-negative integer.

Optionally, the method further includes:
determining the uplink symbol and the downlink symbol according to uplink and downlink configuration information in a high-level parameter.

Optionally, the synchronization broadcast signal block is in a random access slot where the random access occasion is located.

A receiving method is further provided in an embodiment of the present disclosure, applied to a terminal and including:
the terminal not expecting to receive a downlink signal at a valid random access occasion and/or within M symbols before a valid random access occasion, where M is a non-negative integer.

Optionally, the downlink signal includes:
at least one of a synchronous broadcast signal block, a downlink control channel, a channel information reference signal and a downlink data channel.

Optionally, the valid random access occasion is a random access occasion within an uplink symbol; and/or
the valid random access occasion is a random access occasion including a flexible symbol and/or an uplink symbol, of which a start position is after at least N3 symbols after a last downlink symbol and/or a last symbol of a synchronous broadcast signal block, where N3 is a non-negative integer.

Optionally, the synchronization broadcast signal block is in a random access slot where the random access occasion is located.

Optionally, the method further includes:
determining at least one of the uplink symbol, the flexible symbol and the downlink symbol according to uplink and downlink configuration information in a high-level parameter.

Optionally, M is equal to N3.

Optionally, M is not equal to N3.

Optionally, in a case that all transmission symbols occupied by the random access occasion are within the uplink symbol, the random access occasion is determined as a random access occasion within the uplink symbol.

Optionally, in a case that a start symbol occupied by the random access occasion is within the uplink symbol, the random access occasion is a random access occasion within the uplink symbol.

Optionally, in a case that a start symbol occupied by the random access occasion is within the flexible symbol, the random access occasion is a random access occasion including the flexible symbol and/or the uplink symbol.

A resource determination device is further provided in an embodiment of the present disclosure, applied to a terminal and including:
a determining module, configured to determine a random access occasion within an uplink symbol as a valid random access occasion.

Optionally, the device further includes:
a first symbol determining module, configured to determine the uplink symbol according to uplink and downlink configuration information in a high-level parameter.

Optionally, in a case that all transmission symbols occupied by the random access occasion are within the uplink symbol, the random access occasion is a random access occasion within the uplink symbol.

Optionally, in a case that a start symbol occupied by the random access occasion is within the uplink symbol, the random access occasion is a random access occasion within the uplink symbol.

Optionally, the terminal does not expect to receive a downlink signal in N1 symbols before the random access occasion within the uplink symbol; N1 is a non-negative integer.

Optionally, an interval between a start symbol of the random access occasion within the uplink symbol and a last downlink symbol includes any number of symbols;
and/or
an interval between a start symbol of the random access occasion within the uplink symbol and a last symbol of a synchronous broadcast signal block includes any number of symbols.

Optionally, the device further includes:
a second symbol determining module, configured to determine the downlink symbol according to uplink and downlink configuration information in a high-level parameter.

Optionally, the synchronization broadcast signal block is in a random access slot where the random access occasion is located.

A terminal is further provided in an embodiment of the present disclosure, including a memory, a processor and a computer program stored in the memory and executable on the processor, where the processor executes the computer program to perform the resource determination method hereinabove.

A resource configuration device is further provided in an embodiment of the present disclosure, applied to a network device and including: a configuring module, configured to configure a random access occasion, where
in a case that the random access occasion is configured in an uplink symbol,
an interval between a start symbol of the random access occasion and a last downlink symbol is greater than or equal to N2 symbols; and/or
an interval between a start symbol of the random access occasion and a last symbol of a synchronous broadcast signal block is greater than or equal to N2 symbols;
where N2 is a non-negative integer.

Optionally, the device further includes:
a third symbol determining module, configured to determine the uplink symbol and the downlink symbol according to uplink and downlink configuration information in a high-level parameter.

Optionally, the synchronization broadcast signal block is in a random access slot where the random access occasion is located.

A network device is further provided in an embodiment of the present disclosure, including a memory, a processor and a computer program stored in the memory and executable on the processor, where the processor executes the computer program to perform the resource configuration method hereinabove.

A receiving device is further provided in an embodiment of the present disclosure, applied to a terminal and including:
a processing module, configured to not expect to receive a downlink signal at a valid random access occasion and/or within M symbols before a valid random access occasion, where M is a non-negative integer.

Optionally, the downlink signal includes:
at least one of a synchronous broadcast signal block, a downlink control channel, a channel information reference signal and a downlink data channel.

Optionally, the valid random access occasion is a random access occasion within an uplink symbol; and/or
the valid random access occasion is a random access occasion including a flexible symbol and/or an uplink symbol, of which a start position is after at least N3 symbols after a last downlink symbol and/or a last symbol of a synchronous broadcast signal block, where N3 is a non-negative integer.

Optionally, the synchronization broadcast signal block is in a random access slot where the random access occasion is located.

Optionally, the device further includes:
a fourth symbol determining module, configured to determine at least one of the uplink symbol, the flexible symbol and the downlink symbol according to uplink and downlink configuration information in a high-level parameter.

Optionally, M is equal to N3.

Optionally, M is not equal to N3.

Optionally, in a case that all transmission symbols occupied by the random access occasion are within the uplink symbol, the random access occasion is determined as a random access occasion within the uplink symbol.

Optionally, in a case that a start symbol occupied by the random access occasion is within the uplink symbol, the random access occasion is a random access occasion within the uplink symbol.

Optionally, in a case that a start symbol occupied by the random access occasion is within the flexible symbol, the random access occasion is a random access occasion including the flexible symbol and/or the uplink symbol.

A terminal is further provided in an embodiment of the present disclosure, including a memory, a processor and a computer program stored in the memory and executable on the processor, where the processor executes the computer program to perform the receiving method hereinabove.

A computer-readable storage medium is further provided in an embodiment of the present disclosure, where a computer program is stored in the computer-readable storage medium, a processor executes the computer program to perform the resource determination method hereinabove, or the processor executes the computer program to perform the resource configuration method hereinabove, or the processor executes the computer program to perform the receiving method hereinabove.

The technical solution of the present disclosure at least has the following beneficial effects: according to the resource determination method, the receiving method, the device the network device and the terminal in the embodiment of the present disclosure, on one hand, the random access occasion within the uplink symbol is appointed or specified as the valid random access occasion, or the random access occasion configured in the uplink symbol is appointed to meet the interval requirement, so that the uplink symbol always has a high priority, the problem that the random access occasion on the uplink symbol cannot be transmitted is avoided, and the number of the valid random access occasions is increased; on the other hand, the terminal is appointed or specified not to receive a downlink signal on the valid random access occasions and/or within M symbols between the valid random access occasions, so that the terminal is ensured to have enough time to perform an uplink and downlink switching.

### BRIEF DESCRIPTION OF THE DRAWINGS

Fig. 1 is a schematic diagram of steps of a resource determination method in an embodiment of the present disclosure;
FIG. 2 is a schematic diagram of a resource determination method in an embodiment of the present disclosure;
FIG. 3 is a schematic diagram of steps of a resource allocation method in an embodiment of the present disclosure;
FIG. 4 is a schematic diagram of steps of a receiving method in an embodiment of the present disclosure;
FIG. 5 is a first schematic diagram of the receiving method in an embodiment of the present disclosure;
FIG. 6 is a second schematic diagram of a receiving method in an embodiment of the present disclosure;
FIG. 7 is a third schematic diagram of a receiving method in an embodiment of the present disclosure;
FIG. 8 is a schematic structural diagram of a resource determination device in an embodiment of the present disclosure;
FIG. 9 is a schematic structural diagram of a resource configuration device in an embodiment of the present disclosure; and
FIG. 10 is a schematic structural diagram of a receiving device in an embodiment of the present disclosure.

### DETAILED DESCRIPTION

To make the technical problems, technical solutions and advantages to be solved by the present disclosure clearer, the following detailed description is made with reference to the drawings and embodiments.

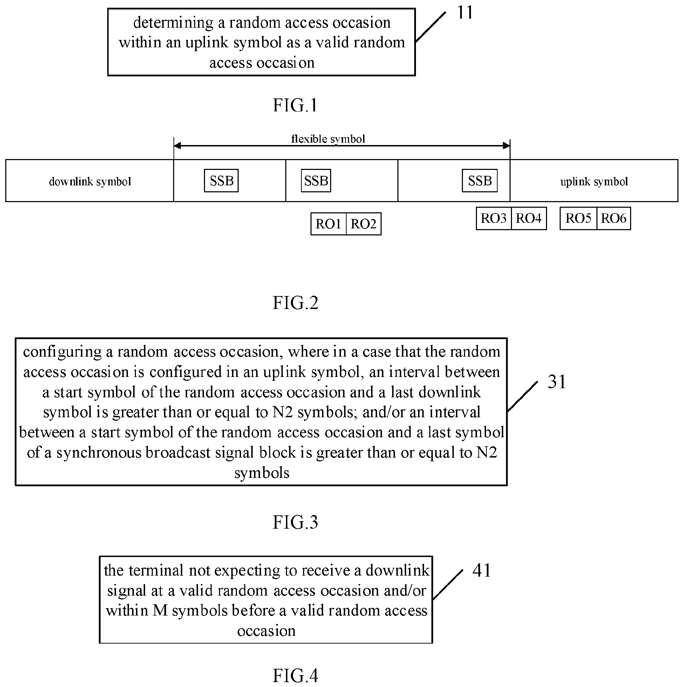

As shown in FIG. 1, a resource determination method is provided in an embodiment of the present disclosure, applied to a terminal and including:
Step 11: determining a random access occasion within an uplink symbol as a valid random access occasion.

In this step, the random access occasion may be abbreviated as RO, and the valid random access occasion may be abbreviated as Valid RO. The valid random access occasion is specifically a random access occasion actually available to the terminal.

In order to ensure that the uplink symbol always has a high priority, it is appointed in the embodiment of the present disclosure that if a random access occasion is within the uplink symbol, the random access occasion is a valid random access occasion and is not limited to other configurations. For example, it is appointed that the random access occasions within the uplink symbols are always a valid random access occasion.

The random access occasion within the uplink symbol is a valid random access occasion without considering an interval between a start symbol of the random access occasion and a last downlink symbol, and/or without considering an interval between a start symbol of the random access occasion and a last symbol of the synchronization broadcast signal block.

In other words, an interval between a start symbol of the random access occasion within the uplink symbol and a last downlink symbol includes any number of symbols;

and/or an interval between a start symbol of the random access occasion within the uplink symbol and a last symbol of a synchronous broadcast signal block includes any number of symbols.

Optionally, the synchronization broadcast signal block is in a random access slot where the random access occasion is located.

Correspondingly, the method further includes:
determining the downlink symbol according to uplink and downlink configuration information in a high-level parameter. In other words, the downlink symbol is provided by the uplink and downlink configuration information in the high-level parameter.

Optionally, in the above embodiment of the present disclosure, the method further includes:
determining the uplink symbol according to uplink and downlink configuration information in a high-level parameter. In other words, the uplink symbol is provided by uplink and downlink configuration information in a high-level parameter.

Optionally, in the embodiment of the present disclosure, in a case that all transmission symbols occupied by the random access occasion are within the uplink symbol, the random access occasion is a random access occasion within the uplink symbol. In other words, if all transmission symbols from a start symbol to an end symbol of a random access occasion are within the uplink symbol, the random access occasion is referred to as a random access occasion within the uplink symbol.

Alternatively, in the above embodiment of the present disclosure, when the start symbol occupied by the random access occasion is in an uplink symbol, the random access occasion is a random access occasion within the uplink symbol. In other words, if a start symbol of a random access occasion is within the uplink symbol, the random access occasion is referred to as a random access occasion within the uplink symbol.

Further, in the above embodiment of the present disclosure, in N1 symbols before the random access occasion within the uplink symbol, the terminal does not expect to receive the downlink signal; N1 is a non-negative integer. That is, the terminal does not receive the downlink signal in N1 symbols before the random access occasion within the uplink symbol. The terminal can perform uplink and downlink switching in the N1 symbols, and the transmission quality is ensured.

For example, as shown in FIG. 2, the random access occasion RO3, the random access occasion RO4, and the random access occasion RO5 are random access occasions within the uplink symbols specified in the embodiment of the present disclosure, so that the RO3, the RO4, and the RO5 are all Valid random access occasions, i.e., Valid ROs.

It should be noted that, as can be seen from the definition of the relevant protocol, the random access occasion RO2 in FIG. 2 is also a valid random access occasion, that is, the RO2 satisfies the following condition: the RO2 does not collide with the synchronous broadcast signal block SSB, and the interval between the RO2 and the last symbol of the synchronous broadcast signal block SSB is greater than a preset value, for example, the preset value is set to 2 symbols.

In summary, in the embodiments of the present disclosure, by appointing or specifying that the random access occasion within the uplink symbol is a valid random access occasion, it is ensured that the uplink symbol always has a high priority, a problem that the random access occasion on the uplink symbol cannot be transmitted is avoided, and the number of valid random access occasions is increased.

As shown in FIG. 3, a resource configuration method is further provided in an embodiment of the present disclosure, applied to a network device and including:
Step 31: configuring a random access occasion, where in a case that the random access occasion is configured in an uplink symbol, an interval between a start symbol of the random access occasion and a last downlink symbol is greater than or equal to N2 symbols; and/or an interval between a start symbol of the random access occasion and a last symbol of a synchronous broadcast signal block is greater than or equal to N2 symbols; where N2 is a non-negative integer.

Further, in the above embodiment of the present disclosure, the method further includes:
determining the uplink symbol and the downlink symbol according to uplink and downlink configuration information in a high-level parameter. In other words, the downlink symbol and the uplink symbol are provided by the uplink and downlink configuration information in the high-level parameter.

Optionally, the synchronization broadcast signal block is in a random access slot where the random access occasion is located.

In the embodiment of the present disclosure, when a network device configures a random access occasion in an uplink symbol, an interval between a start symbol of the random access occasion and a last downlink symbol and/or an interval between the start symbol of the random access occasion and the last symbol of a synchronization broadcast signal block are considered, thereby avoiding a problem that an RO configured on the uplink symbol cannot be transmitted.

As shown in FIG. 4, a receiving method is further provided in an embodiment of the present disclosure, applied to a terminal and including:
Step 41: the terminal not expecting to receive a downlink signal at a valid random access occasion and/or within M symbols before a valid random access occasion, where M is a non-negative integer.

In other words, the terminal does not receive the downlink signal on the valid random access occasion and/or within M symbols before the valid random access occasion.

In this step, the random access occasion may be abbreviated as RO, and the valid random access occasion may be abbreviated as Valid RO. The valid random access occasion is specifically a random access occasion actually available to the terminal.

In order to ensure that the terminal has enough time to perform an uplink and downlink switching, a duration is required to be reserved before the random access occasion for a switching of the terminal, and the terminal does not monitor downlink signals during the time for the switching of the terminal.

For example, it is appointed that the terminal does not expect to receive a downlink signal at a valid random access occasion and/or within M symbols before a valid random access occasion.

Optionally, in the above embodiment of the present disclosure, the downlink signal includes:
at least one of a synchronous broadcast signal block, a downlink control channel, a channel information reference signal and a downlink data channel.

Further, in the above embodiments of the present disclosure,
the valid random access occasion is a random access occasion within an uplink symbol; and/or
the valid random access occasion is a random access occasion including a flexible symbol and/or an uplink symbol, of which a start position is after at least N3 symbols after a last downlink symbol and/or a last symbol of a synchronous broadcast signal block, where N3 is a non-negative integer.

Optionally, the synchronization broadcast signal block is in a random access slot where the random access occasion is located.

Optionally, in the above embodiment of the present disclosure, the method further includes:
determining at least one of the uplink symbol, the flexible symbol and the downlink symbol according to uplink and downlink configuration information in a high-level parameter. In other words, the uplink symbol is provided by uplink and downlink configuration information in a high-level parameter, the flexible symbol is provided by uplink and downlink configuration information in a high-level parameter, and the downlink symbol is provided by uplink and downlink configuration information in a high-level parameter.

In the above embodiments of the present disclosure, M is equal to N3, or M is not equal to N3. The values of M and N3 may be determined according to practical application scenarios, and are not limited herein.

Optionally, in the embodiment of the present disclosure, in a case that all transmission symbols occupied by the random access occasion are within the uplink symbol, the random access occasion is determined as a random access occasion within the uplink symbol. In other words, if all transmission symbols from a start symbol to an end symbol of a random access occasion are within the uplink symbol, the random access occasion is referred to as a random access occasion within the uplink symbol.

Alternatively, in the above embodiment of the present disclosure, in a case that a start symbol occupied by the random access occasion is within the uplink symbol, the random access occasion is a random access occasion within the uplink symbol. In other words, if a start symbol of a random access occasion is within the uplink symbol, the random access occasion is referred to as a random access occasion within the uplink symbol.

Optionally, in the embodiment of the present disclosure, in a case that a start symbol occupied by the random access occasion is within the flexible symbol, the random access occasion is a random access occasion including the flexible symbol and/or the uplink symbol. In other words, if a start symbol of a random access occasion is within a flexible symbol, the random access occasion is referred to as a random access occasion including a flexible symbol and/or an uplink symbol.

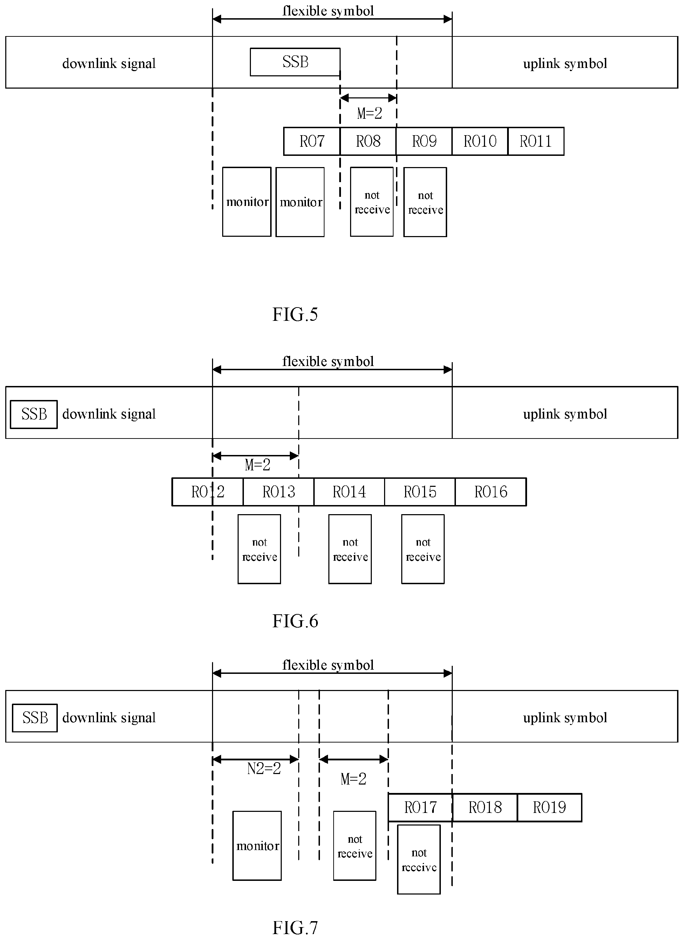

For example, as shown in FIG. 5, the random access occasion RO9, the random access occasion RO10, and the random access occasion RO 11 are all valid random access occasions. Further assuming that M is equal to 2, the terminal does not receive the downlink signal in RO 9 (the uplink symbol in which RO 10 and RO 11 are located is not described herein) and/or 2 symbols before RO 9. It should be noted that, at other symbols spaced apart from RO 9 by more than 2 symbols, the terminal still monitors the downlink signal, which is not limited in this embodiment.

For example, as shown in FIG. 6, the random access occasion RO 14, the random access occasion RO 15, and the random access occasion RO 16 are all valid random access occasions. Further assuming that M is equal to 2, the terminal does not receive the downlink signal in RO 14, RO 15 (the R016 in the uplink symbol would not receive the downlink signal, and will not be described again) and/or 2 symbols before RO 14. It should be noted that, on other symbols spaced apart from R014 by more than 2 symbols, the terminal still monitors the downlink signal, which is not limited in this embodiment.

For another example, as shown in FIG. 7, assuming that N2 is equal to 2 and M is equal to 2, the random access occasion R017, the random access occasion R018 and the random access occasion R019 are all valid random access occasions. The terminal does not receive the downlink signal on RO 17 (RO 18 and RO 19 are in the uplink symbol and do not receive the downlink signal) and/or the 2 symbols before R017. It should be noted that, at other symbols spaced apart from R017 by more than 2 symbols, the terminal still monitors the downlink signal, which is not limited in this embodiment.

In summary, in the above embodiments of the present disclosure, by appointing or specifying that the terminal does not receive downlink signals in the valid random access occasions and/or M symbols between the valid random access occasions, it is ensured that the terminal has enough time to perform an uplink and downlink switching; further, on other symbols in the flexible symbol and spaced apart from the valid random access occasion by more than M symbols, the terminal may monitor or receive the downlink signal, thereby improving the resource utilization rate of the flexible symbol.

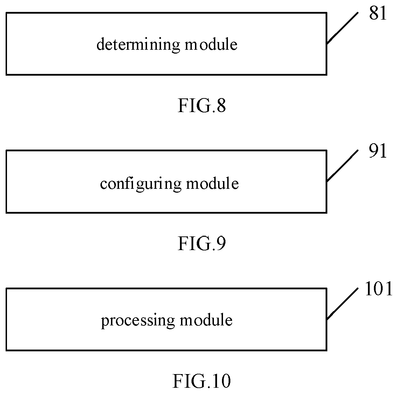

As shown in FIG. 8, a resource determination device is further provided in an embodiment of the present disclosure, including:
a determining module 81, configured to determine a random access occasion within an uplink symbol as a valid random access occasion.

Optionally, the device further includes:
a first symbol determining module 81, configured to determine the uplink symbol according to uplink and downlink configuration information in a high-level parameter.

Optionally, in a case that all transmission symbols occupied by the random access occasion are within the uplink symbol, the random access occasion is a random access occasion within the uplink symbol.

Optionally, an interval between a start symbol of the valid random access occasion and a last downlink symbol is smaller than N1 symbols;
and/or
an interval between a start symbol of the valid random access occasion and a last symbol of a synchronous broadcast signal block is smaller than N1 symbols, wherein N1 is a positive integer.

Optionally, the synchronization broadcast signal block is in a random access slot where the random access occasion is located.

In summary, in the embodiments of the present disclosure, by appointing or specifying that the random access occasion within the uplink symbol is a valid random access occasion, it is ensured that the uplink symbol always has a high priority, a problem that the random access occasion on the uplink symbol cannot be transmitted is avoided, and the number of valid random access occasions is increased.

It should be noted that, the resource determination device provided in the embodiment of the present disclosure is a resource determination device capable of performing the resource determination method, and all embodiments of the resource determination method are applicable to the device and can achieve the same or similar beneficial effects.

A network device is further provided in an embodiment of the present disclosure, including a memory, a processor and a computer program stored in the memory and executable on the processor, where the processor executes the computer program to perform the resource determination method hereinabove, and the network device achieve the same technical effect, and in order to avoid repetition, details thereof are not repeated here.

A computer-readable storage medium is further provided in an embodiment of the present disclosure, where a computer program is stored in the computer-readable storage medium, a processor executes the computer program to perform the resource determination method hereinabove, and the computer-readable storage medium achieve the same technical effects, and in order to avoid repetition, the details thereof are not repeated here. The computer-readable storage medium may be a Read-Only Memory (ROM), a Random Access Memory (RAM), a magnetic disk or an optical disk.

As shown in FIG. 9, a resource configuration device is further provided in an embodiment of the present disclosure, applied to a network device and including:
a configuring module 91, configured to configure a random access occasion, where
in a case that the random access occasion is configured in an uplink symbol,
an interval between a start symbol of the random access occasion and a last downlink symbol is greater than or equal to N2 symbols; and/or
an interval between a start symbol of the random access occasion and a last symbol of a synchronous broadcast signal block is greater than or equal to N2 symbols;
where N2 is a non-negative integer.

Optionally, the device further includes:
a third symbol determining module, configured to determine the uplink symbol and the downlink symbol according to uplink and downlink configuration information in a high-level parameter.

Optionally, the synchronization broadcast signal block is in a random access slot where the random access occasion is located.

In summary, in the embodiment of the present disclosure, when a network device configures a random access occasion in an uplink symbol, an interval between a start symbol of the random access occasion and a last downlink symbol and/or an interval between the start symbol of the random access occasion and the last symbol of a synchronization broadcast signal block are considered, thereby avoiding a problem that an RO configured on the uplink symbol cannot be transmitted

It should be noted that, the resource configuration device provided in the embodiment of the present disclosure is a resource configuration device capable of performing the resource configuration method, and all embodiments of the resource configuration method are applicable to the device and can achieve the same or similar beneficial effects.

A network device is further provided in an embodiment of the present disclosure, including a memory, a processor and a computer program stored in the memory and executable on the processor, where the processor executes the computer program to perform the resource configuration method hereinabove, and the network device achieve the same technical effect, and in order to avoid repetition, details thereof are not repeated here.

A computer-readable storage medium is further provided in an embodiment of the present disclosure, where a computer program is stored in the computer-readable storage medium, a processor executes the computer program to perform the resource configuration method hereinabove, and the computer-readable storage medium achieve the same technical effects, and in order to avoid repetition, the details thereof are not repeated here. The computer-readable storage medium may be a Read-Only Memory (ROM), a Random Access Memory (RAM), a magnetic disk or an optical disk.

As shown in FIG. 10, a receiving device is further provided in an embodiment of the present disclosure, applied to a terminal and including:
a processing module 101, configured to not expect to receive a downlink signal at a valid random access occasion and/or within M symbols before a valid random access occasion, where M is a non-negative integer.

Optionally, the downlink signal includes:
at least one of a synchronous broadcast signal block, a downlink control channel, a channel information reference signal and a downlink data channel.

Optionally, the valid random access occasion is a random access occasion within an uplink symbol; and/or
the valid random access occasion is a random access occasion including a flexible symbol and/or an uplink symbol, of which a start position is after at least N3 symbols after a last downlink symbol and/or a last symbol of a synchronous broadcast signal block, where N3 is a non-negative integer.

Optionally, the synchronization broadcast signal block is in a random access slot where the random access occasion is located.

Optionally, the device further includes:
a fourth symbol determining module, configured to determine at least one of the uplink symbol, the flexible symbol and the downlink symbol according to uplink and downlink configuration information in a high-level parameter.

Optionally, M is equal to N3.

Optionally, M is not equal to N3.

Optionally, in a case that all transmission symbols occupied by the random access occasion are within the uplink symbol, the random access occasion is determined as a random access occasion within the uplink symbol.

Optionally, in a case that a start symbol occupied by the random access occasion is within the uplink symbol, the random access occasion is a random access occasion within the uplink symbol.

Optionally, in a case that a start symbol occupied by the random access occasion is within the flexible symbol, the random access occasion is a random access occasion including the flexible symbol and/or the uplink symbol.

In summary, in the above embodiments of the present disclosure, by appointing or specifying that the terminal does not receive downlink signals in the valid random access occasions and/or M symbols between the valid random access occasions, it is ensured that the terminal has enough time to perform an uplink and downlink switching; further, on other symbols in the flexible symbol and spaced apart from the valid random access occasion by more than M symbols, the terminal may monitor or receive the downlink signal, thereby improving the resource utilization rate of the flexible symbol.

It should be noted that, the receiving device provided in the embodiment of the present disclosure is a receiving device capable of performing the receiving method, and all embodiments of the receiving method are applicable to the device and can achieve the same or similar beneficial effects.

A terminal is further provided in an embodiment of the present disclosure, including a memory, a processor and a computer program stored in the memory and executable on the processor, where the processor executes the computer program to perform the receiving method hereinabove, and the terminal may achieve the same technical effect, and in order to avoid repetition, details thereof are not repeated here.

A computer-readable storage medium is further provided in an embodiment of the present disclosure, where a computer program is stored in the computer-readable storage medium, a processor executes the computer program to perform the receiving method hereinabove, and the computer-readable storage medium achieve the same technical effects, and in order to avoid repetition, the details thereof are not repeated here. The computer-readable storage medium may be a Read-Only Memory (ROM), a Random Access Memory (RAM), a magnetic disk or an optical disk.

As will be appreciated by one skilled in the art, embodiments of the present disclosure may be provided as a method, system, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more computer-readable storage media (including, but not limited to, disk storage, optical storage, and the like) having computer-usable program code embodied therein.

The present disclosure is described with reference to flowchart illustrations and/or block diagrams of methods, device (systems) and computer program products according to embodiments of the application. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor, or other programmable data processing device to produce a machine, such that the instructions, which execute via the processor of the computer or other programmable data processing device, create means for implementing the functions specified in the flowchart flow or flows and/or block or blocks.

These computer program instructions may also be stored in a computer-readable storage medium that can direct a computer or other programmable data processing device to function in a particular manner, such that the instructions stored in the computer-readable storage medium produce an article of manufacture including instruction means which implement the function specified in the flowchart flow or flows and/or block diagram block or blocks.

These computer program instructions may also be loaded onto a computer or other programmable data processing device to cause a series of operational steps to be performed on the computer or other programmable device to produce a computer implemented process such that the instructions which execute on the computer or other programmable device provide steps for implementing the functions specified in the flowchart flow or flows and/or block diagram block or blocks.

While the foregoing is directed to some embodiments of the present disclosure, it will be appreciated by those skilled in the art that various changes and modifications may be made therein without departing from the principles of the disclosure, and such changes and modifications are covered by the scope of the disclosure.

## Claims

1. A resource determination method, applied to a terminal and comprising:
determining a random access occasion within an uplink symbol as a valid random access occasion.

2. The method according to claim 1, further comprising:
determining the uplink symbol according to uplink and downlink configuration information in a high-level parameter.

3. The method according to claim 1, wherein in a case that all transmission symbols occupied by the random access occasion are within the uplink symbol, the random access occasion is a random access occasion within the uplink symbol.

4. The method according to claim 1, wherein in a case that a start symbol occupied by the random access occasion is within the uplink symbol, the random access occasion is a random access occasion within the uplink symbol.

5. The method according to claim 1, wherein the terminal does not expect to receive a downlink signal in N1 symbols before the random access occasion within the uplink symbol; N1 is a non-negative integer.

6. The method according to claim 1, wherein
an interval between a start symbol of the random access occasion within the uplink symbol and a last downlink symbol includes any number of symbols;
and/or
an interval between a start symbol of the random access occasion within the uplink symbol and a last symbol of a synchronous broadcast signal block includes any number of symbols.

7. The method according to claim 6, further comprising:
determining the downlink symbol according to uplink and downlink configuration information in a high-level parameter.

8. The method according to claim 6, wherein the synchronization broadcast signal block is in a random access slot where the random access occasion is located.

9. A resource configuration method, applied to a network device and comprising: configuring a random access occasion, wherein
in a case that the random access occasion is configured in an uplink symbol,
an interval between a start symbol of the random access occasion and a last downlink symbol is greater than or equal to N2 symbols; and/or
an interval between a start symbol of the random access occasion and a last symbol of a synchronous broadcast signal block is greater than or equal to N2 symbols;
wherein N2 is a non-negative integer.

10. The method according to claim 9, further comprising:
determining the uplink symbol and the downlink symbol according to uplink and downlink configuration information in a high-level parameter.

11. The method according to claim 9, wherein the synchronization broadcast signal block is in a random access slot where the random access occasion is located.

12. A receiving method, applied to a terminal and comprising:
the terminal not expecting to receive a downlink signal at a valid random access occasion and/or within M symbols before a valid random access occasion, wherein M is a non-negative integer.

13. The method according to claim 12, wherein the downlink signal comprises:
at least one of a synchronous broadcast signal block, a downlink control channel, a channel information reference signal and a downlink data channel.

14. The method according to claim 12, wherein
the valid random access occasion is a random access occasion within an uplink symbol; and/or
the valid random access occasion is a random access occasion comprising a flexible symbol and/or an uplink symbol, of which a start position is after at least N3 symbols after a last downlink symbol and/or a last symbol of a synchronous broadcast signal block, wherein N3 is a non-negative integer.

15. The method according to claim 14, wherein the synchronization broadcast signal block is in a random access slot where the random access occasion is located.

16. The method according to claim 14, further comprising:
determining at least one of the uplink symbol, the flexible symbol and the downlink symbol according to uplink and downlink configuration information in a high-level parameter.

17. The method according to claim 14, wherein M is equal to N3.

18. The method according to claim 14, wherein M is not equal to N3.

19. The method according to claim 14, wherein in a case that all transmission symbols occupied by the random access occasion are within the uplink symbol, the random access occasion is determined as a random access occasion within the uplink symbol.

20. The method according to claim 14, wherein in a case that a start symbol occupied by the random access occasion is within the uplink symbol, the random access occasion is a random access occasion within the uplink symbol.

21. The method according to claim 14, wherein in a case that a start symbol occupied by the random access occasion is within the flexible symbol, the random access occasion is a random access occasion comprising the flexible symbol and/or the uplink symbol.

22. A resource determination device, applied to a terminal and comprising:
a determining module, configured to determine a random access occasion within an uplink symbol as a valid random access occasion.

23. The device according to claim 22, further comprising:
a first symbol determining module, configured to determine the uplink symbol according to uplink and downlink configuration information in a high-level parameter.

24. The device according to claim 22, wherein in a case that all transmission symbols occupied by the random access occasion are within the uplink symbol, the random access occasion is a random access occasion within the uplink symbol.

25. The device according to claim 22, wherein in a case that a start symbol occupied by the random access occasion is within the uplink symbol, the random access occasion is a random access occasion within the uplink symbol.

26. The device according to claim 22, wherein the terminal does not expect to receive a downlink signal in N1 symbols before the random access occasion within the uplink symbol; N1 is a non-negative integer.

27. The device according to claim 22, wherein
an interval between a start symbol of the random access occasion within the uplink symbol and a last downlink symbol includes any number of symbols;
and/or
an interval between a start symbol of the random access occasion within the uplink symbol and a last symbol of a synchronous broadcast signal block includes any number of symbols.

28. The device according to claim 27, further comprising:
a second symbol determining module, configured to determine the downlink symbol according to uplink and downlink configuration information in a high-level parameter.

29. The device according to claim 27, wherein the synchronization broadcast signal block is in a random access slot where the random access occasion is located.

30. A terminal, comprising a memory, a processor and a computer program stored in the memory and executable on the processor, wherein the processor executes the computer program to perform the resource determination method according to any one of claims 1 to 8.

31. A resource configuration device, applied to a network device and comprising: a configuring module, configured to configure a random access occasion, wherein
in a case that the random access occasion is configured in an uplink symbol,
an interval between a start symbol of the random access occasion and a last downlink symbol is greater than or equal to N2 symbols; and/or
an interval between a start symbol of the random access occasion and a last symbol of a synchronous broadcast signal block is greater than or equal to N2 symbols;
wherein N2 is a non-negative integer.

32. The device according to claim 31, further comprising:
a third symbol determining module, configured to determine the uplink symbol and the downlink symbol according to uplink and downlink configuration information in a high-level parameter.

33. The device according to claim 31, wherein the synchronization broadcast signal block is in a random access slot where the random access occasion is located.

34. A network device, comprising a memory, a processor and a computer program stored in the memory and executable on the processor, wherein the processor executes the computer program to perform the resource configuration method according to any one of claims 9 to 11.

35. A receiving device, applied to a terminal and comprising:
a processing module, configured to not expect to receive a downlink signal at a valid random access occasion and/or within M symbols before a valid random access occasion, wherein M is a non-negative integer.

36. The device according to claim 35, wherein the downlink signal comprises:
at least one of a synchronous broadcast signal block, a downlink control channel, a channel information reference signal and a downlink data channel.

37. The device according to claim 35, wherein
the valid random access occasion is a random access occasion within an uplink symbol; and/or
the valid random access occasion is a random access occasion comprising a flexible symbol and/or an uplink symbol, of which a start position is after at least N3 symbols after a last downlink symbol and/or a last symbol of a synchronous broadcast signal block, wherein N3 is a non-negative integer.

38. The device according to claim 37, wherein the synchronization broadcast signal block is in a random access slot where the random access occasion is located.

39. The device according to claim 37, further comprising:
a fourth symbol determining module, configured to determine at least one of the uplink symbol, the flexible symbol and the downlink symbol according to uplink and downlink configuration information in a high-level parameter.

40. The device according to claim 37, wherein M is equal to N3.

41. The device according to claim 37, wherein M is not equal to N3.

42. The device according to claim 37, wherein in a case that all transmission symbols occupied by the random access occasion are within the uplink symbol, the random access occasion is determined as a random access occasion within the uplink symbol.

43. The device according to claim 37, wherein in a case that a start symbol occupied by the random access occasion is within the uplink symbol, the random access occasion is a random access occasion within the uplink symbol.

44. The device according to claim 37, wherein in a case that a start symbol occupied by the random access occasion is within the flexible symbol, the random access occasion is a random access occasion comprising the flexible symbol and/or the uplink symbol.

45. A terminal, comprising a memory, a processor and a computer program stored in the memory and executable on the processor, wherein the processor executes the computer program to perform the receiving method according to any one of claims 12 to 21.

46. A computer-readable storage medium, wherein a computer program is stored in the computer-readable storage medium, a processor executes the computer program to perform the resource determination method according to any one of claims 1 to 8, or the processor executes the computer program to perform the resource configuration method according to any one of claims 9 to 11, or the processor executes the computer program to perform the receiving method according to any one of claims 12 to 21.
